# EUROPÄISCHE PATENTSCHRIFT

(11) **EP 1 397 455 B1**
(45) Veröffentlichungstag und Bekanntmachung des Hinweises auf die Patenterteilung: **05.07.2006**
(21) Anmeldenummer: 02740538.0
(22) Anmeldetag: 30.04.2002
(51) Int. Cl.: C09J 5/06, C09J 201/02, B29B 9/10, C08J 3/12

(54) **SCHMELZKLEBSTOFF IN FORM EINES GRANULATES**
HOT-MELT ADHESIVE PROVIDED IN THE FORM OF GRANULATED MATERIAL
ADHESIF FUSIBLE SE PRESENTANT SOUS LA FORME DE GRANULES

(30) Priorität: 09.05.2001 DE 10122437
(43) Veröffentlichungstag der Anmeldung: 17.03.2004
(73) Patentinhaber: Henkel Kommanditgesellschaft auf Aktien, 40589 Düsseldorf (DE)
(72) Erfinder: PRIMKE, Hartmut, 73441 Bopfingen (DE); PETRY, Gerald, 41836 Hückelhoven (DE); NIXON, Andrew, 40670 Meerbusch (DE); KOHLSTADT, Hans-Peter, 42549 Velbert (DE); SCHEFFLER, Ingolf, 41470 Neuss (DE); WICHELHAUS, Jürgen, 42113 Wuppertal (DE); KREBS, Michael, 40724 Hilden (DE); RUDOLF, Michael, 73441 Bopfingen (DE)
(86) Internationale Anmeldenummer: PCT/EP2002/004729
(87) Internationale Veröffentlichungsnummer: WO 2002/090454

(56) Entgegenhaltungen:
- WO-A-00/47687
- US-A- 4 384 083
- DATABASE WPI Section Ch, Week 199944 Derwent Publications Ltd., London, GB; Class A25, AN 1999-522892 XP002214075 & JP 11 228833 A (SANYO CHEM IND LTD), 24. August 1999 (1999-08-24)

## Beschreibung

Die Erfindung betrifft ein Verfahren zur Herstellung von Schmelzklebstoff-Zusammensetzungen in Form eines Granulates oder Pulvers, bei der mindestens ein Teil der polymeren Bestandteile feuchtigkeitsreaktive Gruppen enthält. Weiterhin betrifft die Erfindung auch entsprechende Schmelzklebstoff-Zusammensetzungen, hergestellt nach den entsprechenden Verfahren, die als feuchtigkeitsreaktive Gruppen Isocyanat-Endgruppen enthalten oder Silangruppen enthalten können und zusätzlich strahlungshärtbare Bestandteile. Weiterhin betrifft die Erfindung ein Verfahren zum Verbinden von flächigen Gebilden oder Formteilen unter Verwendung eines reaktiven Granulates oder Pulvers.

Reaktive, einkomponentige, feuchtigkeitshärtende Polyurethan-Schmelzklebstoffe sind feuchtigkeitshärtende bzw. feuchtigkeitsvernetzende Klebstoffe, die bei Raumtemperatur fest sind und in Form ihrer Schmelze als Klebstoff appliziert werden, und deren polymere Bestandteile Urethangruppen sowie reaktionsfähige Isocyanatgruppen enthalten. In gleicher Weise können feuchtigkeitshärtende bzw. feuchtigkeitsvernetzende Schmelzklebstoffe Silangruppen als reaktive Gruppen enthalten, diese können im Prinzip auf der Basis von Polyurethan-Prepolymeren hergestellt worden sein, sie können jedoch auch durch polymeranaloge Reaktionen aus Polyamiden und anderen Polymeren mit Hilfe von organofunktionellen Silanen hergestellt worden sein. Durch das Abkühlen dieser Schmelze nach dem Auftrag und Fügen der zu verbindenden Substrat-Teile erfolgt zunächst eine rasche physikalische Abbindung des Schmelzklebstoffes durch dessen Erstarren. Daran schließt sich eine chemische Reaktion der noch vorhandenen Isocyanatgruppen oder Silangruppen mit Feuchtigkeit aus der Umgebung zu einem vernetzten unschmelzbaren Klebstoff an. Reaktive Schmelzklebstoffe auf der Basis von Isocyanat-terminierten oder Silanterminierten Polyurethanprepolymeren sind z.B. bei H.F. Huber und H. Müller in "Shaping Reactive Hotmelts Using LMW Copolyesters", Adhesives Age, November 1987, Seite 32 bis 35 beschrieben.

Reaktive Polyurethan-Kleb-/Dichtstoffe zeichnen sich durch ein sehr hohes Leistungsprofil aus. Daher konnten in den letzten Jahren zunehmend neue Anwendungen für diese Kleb-/Dichtstoffe erschlossen werden. Zusammensetzungen für derartige Klebstoffe und/oder Dichtstoffe sind bereits aus sehr vielen Patentanmeldungen und sonstigen Veröffentlichungen bekannt.

Neben vielen Vorteilen weisen diese Schmelzklebstoff-Zusammensetzungen auch einige systembedingte Nachteile auf. Systembedingt sind die feuchtigkeitshärtenden Schmelzklebstoffe sehr empfindlich gegen den Zutritt von Feuchtigkeit aus der umgebenden Atmosphäre. Sie werden daher üblicherweise in feuchtigkeitsdichten Gebinden verpackt, wobei sie üblicherweise als kompakter Block in diesen Gebinden aufbewahrt werden. Dies bedeutet, daß zumindest bei großvolumiger Anwendung aus Fässern für die Applikation Faßschmelz-Anlagen notwendig sind, so daß der Schmelzklebstoff unter Feuchtigkeitsausschluß aufgeschmolzen und in die Applikationsanlage gefördert werden muss. Für nicht reaktive Schmelzklebstoffe ist es seit langem bekannt und Stand der Technik, diese nicht nur in Form von kompakten aufzuschmelzenden Blöcken anzubieten, sondern auch in Form eines rieselfähigen Stückgutes, d.h. in Form von Granulat, Pastillen, Pulver und ähnlichen teilchenförmigen Zuständen. Die Vorteile derartiger Anbietungsformen sind leichte Verpackung und Lagerung in Beuteln, Säcken oder "BigBags", weiterhin können derartige teilchenförmige Schmelzklebstoffe leicht gefördert werden, sei es durch Ansaugen, pneumatische Förderung oder durch Aufgabe in Silos, aus denen die teilchenförmigen Klebstoffpartikel direkt im freien Fall in die Aufschmelzeinheit fallen können. Es ist daher wünschenswert, auch die feuchtigkeitsreaktiven Schmelzklebstoffe in schütt - bzw. rieselfähiger Form anbieten zu können.

Die Schrift DD 280540 A1 beschreibt ein Verfahren zur Erzeugung von Klebeverbindungen mittels Schmelzklebstoffen. Dazu wird vorgeschlagen, daß eine erste Schmelzklebstoffzubereitung aus einem EVA - Copolymeren, einem hydroxyl- und / oder carboxylfunktionalisierten Oligomeren bzw. Hochpolymeren und eine zweite Zubereitung aus einem EVA - Copolymeren, klebrigmachenden Harzen und einem mehrfunktionellen Isocyanat in Granulatform vorgemischt werden und dann einem Aufschmelzextruder zugeführt werden, derart, daß die Verweilzeit im Extruder bei einer Temperatur von 330 K bis 480 K im Bereich von 10 s bis 600 s gehalten wird und das Mischungsverhältnis beider Zubereitungen 1:5 bis 5:1 beträgt oder beide Schmelzklebstoffzubereitungen getrennt geschmolzen und kurz vor dem Auftragen intensiv gemischt werden. Einkomponentige, feuchtigkeitshärtende Schmelzklebstoffe in Granulatform werden in dieser Schrift nicht offenbart.

US 4384083 beschreibt Schmelzklebstoffe auf der Basis von granulierten, polyetherbasierten, thermoplastischen Polyurethanen und granulierten Polyaminoamiden. Dabei wird beschrieben, daß die (isocyanatterminierte) Polyurethankomponente und die Polyaminoamidkomponente in Granulatform gemischt werden und dann unter Aufschmelzen zunächst niedriger Scherung und dann hoher Scherung unterworfen werden. Das Extrudat soll dann entweder direkt auf das zu verklebende Substrat appliziert werden oder es kann zu Pellets granuliert werden und später verwendet werden. Das Extrudat kann weiterhin als vorgeformter Film oder als Pulver konfektioniert werden oder auch in Lösungsmittel gelöst werden. Schütt- bzw. rieselfähige einkomponentige feuchtigkeitshärtende Schmelzklebstoffe werden auch in dieser Schrift nicht offenbart.

Die DE 19541923 beschreibt ein reaktives System in Granulatform auf der Basis von Harz-/ Polyurethan-/ EVA- Gemischen enthaltend ein reaktives Acrylat, Epoxidharz oder (blockierte) Isocyanatgruppen sowie Hydroxykomponenten. Dieses System soll thermisch vernetzbar sein.

Die EP 832953 beschreibt eine pulverförmige reaktive Polyurethan-Zusammensetzung auf der Basis eines blockierten Polyurethan-Prepolymers sowie nichtfunktionellen Urethan-Verbindungen auf der Basis von Monoisocyanaten und Mono- oder Polyalkoholen oder Aminen oder alternativ Polyisocyanaten und monofunktionellen Alkoholen oder Aminen. Als Verwendung für dieses Hotmelt - Harz werden Textilverklebungen sowie Schalengießverfahren ("slush molding") angegeben.

Die WO 93/25599 beschreibt ein Verfahren und Stoffmischungen zur Herstellung reaktiver Schmelzmassen, die vor allem als Schmelzkleber Verwendung finden können, aus schmelzbaren hydroxy- oder aminofunktionellen Polymeren oder Polymermischungen, die bei Temperaturen über 40 °C in den flüssigen Zustand übergehen, und pulverförmigen, festen, Oberflächen-desaktivierten Polyisocyanaten. Diese Schrift offenbart auf Seite 16, daß trägerfreie, reaktive Schmelzmassen aus den vorgenannten Zusammensetzungen in Form von Filmen, Raupen, Netzen, als Granulat oder als ungeformter Körper erhalten werden, indem der flüssige, nicht vernetzte Kleber auf einen Träger appliziert wird, der eine nicht haftende oder adhesive Oberfläche trägt und oberflächlich mit einem Trennmittel versehen ist. Nach dem Abkühlen des Klebers kann dieser von der Trägeroberfläche gelöst werden und entweder zwischengelagert werden oder auf die zu klebende Substratoberfläche appliziert werden. Gemäß dieser Schrift werden reaktive Heißschmelzpulver erhalten, indem die flüssige Mischung auf ein bewegliches, adhesiv beschichtetes Förderband extrudiert und dort unter den Schmelzpunkt gekühlt wird. Nach dem Erstarren kann der Heißschmelzkleber vom Trägerband gelöst werden und nach bekannten Methoden, z.B. durch Kaltmahlung, zu Granulat oder Pulver zerkleinert und ggf. in die gewünschten Fraktionen gesiebt werden. Feuchtigkeitshärtende Schmelzklebstoffe in Granulatform werden in dieser Schrift jedoch nicht offenbart.

In dem Aufsatz von V. Neuenhaus, "Kapazitive Füllstandsüberwachung an Granulat-Behältern", Adhäsion, Kleben & Dichten, Heft 1-2, 2001, S26 - 28 wird ausgeführt, daß feuchtigkeithärtende einkomponentige Schmelzklebstoffe wegen ihrer starken Feuchtigkeitsreaktivität nicht granulierbar sind.

In der JP 11228833 werden feuchtigkeitsvernetzbare Polyurethanharz-Zusammensetzungen beschrieben, als hotmelt oder Pulverlack-Material auf Basis von pulverförmigen thermoplastischen Polyurethanen mit hydrosierbaren Silangruppen, Katalysatoren für die Hydrolyse-Reaktion der Silangruppen, wobei die Oberfläche der pulverförmigen Bestandteile mit den entsprechenden hydrosierbaren Silanen behandelt werden.
Die WO 00/47687 betrifft Mehrkomponenten-Beschichtungs- und Klebstoffmaterialien, die durch kontinuierliches Vermischen der einzelnen Komponenten in einem flüssigen Zustand hergestellt werden aus einer Komponente auf Basis eines höhermolekularen reaktiven Ausgangspolymers, zusammen mit einer zweiten Komponente auf Basis eines reaktiven Isocyanats terminierten Vernetzers. Die Komponenten werden danach in flüssigem Zustand den Beschichtungsanlagen oder dergleichen Verwendungen direkt zugeführt.

Die EP 1231232 beschreibt selbsttragende, reaktive Schmelzklebelemente, die einen bei Raumtemperatur festen reaktiven Einkomponenten-Schmelzklebstoff umfassen, wobei dieser mindestens ein, bei Raumtemperatur festes oder flüssiges Isocyanat und mindestens ein, bei Raumtemperatur festes Isocyanat reaktives Polymer und/oder Harz umfasst. Die festen oder flüssigen Isocyanate werden in eine reaktive Matrix eingebettet. Weiterhin kann das reaktive Schmelzklebeelement Additive, wie Metalle in Pulverform, Graphit oder Ruß zur Verbesserung der Wärmeleitfähigkeit und/oder der Empfindlichkeit für Strahlungsinduktion enthalten.

Angesichts dieses Standes der Technik haben sich die Erfinder die Aufgabe gestellt, ein Verfahren zur Herstellung von einkomponentigen feuchtigkeitsreaktiven Schmelzklebstoff-Zusammensetzungen bereitzustellen, die in riesel- oder schüttfähiger Form herstellbar und anwendbar sind sowie entsprechende, durch das Verfahren herstellbare Schmelzklebstoff-Zusammensetzungen.

Die Lösung der erfindungsgemäßen Aufgabe ist den Patentansprüchen zu entnehmen. Sie besteht im Wesentlichen in der Bereitstellung eines Verfahrens zur Herstellung von Schmelzklebstoff-Zusammensetzungen in der Form eines Granulates oder Pulvers, wobei zumindest ein Teil der polymeren Bestandteile feuchtigkeitsreaktive Gruppen enthält.

Ein weiterer Gegenstand der vorliegenden Erfindung ist ein Verfahren zur Herstellung eines feuchtigkeitshärtenden Schmelzklebstoff - Granulates oder - Pulvers das die folgenden Verfahrensschritte beinhaltet:
a) Aufschmelzen der Schmelzklebstoff-Zusammensetzung und Erwärmen der Schmelze auf Temperaturen zwischen 110 °C und 180 °C, vorzugsweise 130°C bis 150 °C unter Ausschluß von Feuchtigkeit,
b) Extrudieren dieser Schmelze durch Düsen mit einem Durchmesser von 0,5 mm bis 30 mm, vorzugsweise von 2 bis 10 mm auf eine gekühlte Fläche unter Feuchtigkeitsausschluss,
c) Abkühlen des Granulates unter Feuchtigkeitsausschluss, wobei die Zusammensetzung erstarrt,
d) Abnehmen des gekühlten Schmelzklebstoff-Granulates und ggf. Nachkristallisieren in einem bewegten, temperierten, feuchtigkeitsdichten Behältnis wie, z.B. Wirbelschichtbett, Vibrationsrinne oder Drehtrommel, bis die Granulatteilchen soweit verfestigt sind, daß sie im nachfolgenden Schritt nicht mehr verkleben,
e) Abfüllen des Granulates unter Feuchtigkeitsausschluss in feuchtigkeitsdichte Verpackungen.

Ein weiterer Gegenstand der vorliegenden Erfindung ist ein Verfahren zum Verbinden von flächigen Gebilden oder Formteilen, das die folgenden wesentlichen Verfahrenschritte umfasst:
a.) Homogenisieren und Aufschmelzen des reaktiven Granulates oder Pulvers, ggf. in einer inerten Atmosphäre unter Ausschluß von Feuchtigkeit und/oder Sauerstoff unter Verwendung eines heizbaren Mischaggregates ggf. mit hoher Scherung,
b.) Extrusion des homogenisierten reaktiven thermoplastischen Gemisches ggf. durch eine formgebende Düse auf mindestens eine Oberfläche eines Flächengebildes oder Formteils,
c.) Fügen eines zweiten dazu passenden Flächengebildes oder Formteils auf die aufgebrachte Schicht des reaktiven Gemisches,
d.) ggf. mechanisches Fixieren der gefügten Flächengebilde oder Formteile,
e.) Abkühlen des so gebildeten Verbundsystems auf Raumtemperatur, wobei die reaktive Schmelzklebstoff-Zusammensetzung erstarrt und unter Vernetzung aushärtet.

Prinzipiell eignet sich für die Herstellung von schütt- oder rieselfähigen, feuchtigkeitshärtenden Schmelzklebstoff - Zusammensetzungen eine Vielzahl von feuchtigkeitsreaktiven Schmelzklebstoffen. Für eine effiziente Lagerung dürfen die Schmelzklebstoffteilchen jedoch keinen starken kalten Fluss zeigen, so dass die Teilchen nicht miteinander verkleben und während der Lagerung rieselfähig oder schüttfähig bleiben. Für eine effiziente Herstellung ist es weiterhin wichtig, dass die Teilchen nach ihrer Formung so rasch erstarren, dass sie weiter gefördert und verpackt werden können ohne ihre Schütt- bzw. Rieselfähigkeit zu verlieren.

Rieselfähig oder schüttfähig bedeutet dabei, dass das Granulat aufgrund eines Eigengewichtes auch nach einer Lagerung von 4 mindestens aber von 2 Monaten bei Temperaturen bis zu + 40 °C bei einem Eigendruck von etwa 30 cm Füllhöhe noch durch eine Öffnung von 5 cm Durchmesser "fließt".

Obwohl prinzipiell die erfindungsgemäßen schütt- oder rieselfähigen feuchtigkeitshärtenden Schmelzklebstoff - Zusammensetzungen auch in Pulverform hergestellte werden können, ist die Granulat- oder Pastillenform ("pellet") bevorzugt. Das Granulat oder die Pellets haben einen Korndurchmesser von 0,5 mm bis 30 mm vorzugsweise von 2 bis 10 mm. Die Korngröße wird dabei durch Siebanalyse bestimmt. Vorzugsweise hat das Korn eine kugelartige oder linsenförmige Form, sie kann aber auch elliptisch oder zylinderförmig sein.

Neben den vorgenannte Aggregatformen "Pulver", Granulat oder Pastillenform können die erfindungsgemäßen schütt- oder rieselfähigen feuchtigkeitshärtenden Schmelzklebstoffe - Zusammensetzungen auch größere Formkörper beinhalten, z.B. kissenförmige oder zylinderförmige Teilchen mit bis zu 60 mm Länge. Die letztgenannten Formkörper weisen dabei vorzugsweise eine Kern-Schalestruktur auf, wobei das reaktive Kemmaterial durchaus nicht kleb- bzw. blockfrei zu sein braucht, sondern nur das äußere Schalen material kleb- und blockfrei ist. Derartiges Kern-Schalenmaterial kann unter anderem durch Koextrusions - Prozesse oder durch chemische Oberflächendeaktivierung erzeugt werden, wie weiter unten näher ausgeführt wird.

Um eine effiziente Überführung der Schmelzklebstoff - Zusammensetzung in die Teilchenform zu ermöglichen, darf die Schmelzklebstoff - Zusammensetzung nicht zu hochviskos sein. Die Viskosität der Schmelze soll in einem Bereich von 3 Pa.s bei 110 °C bis zu 80 Pa.s bei 180°C liegen. Typische Werte sind zum Beispiel 90 Pa.s bei 150 °C bis zu 10 Pa.s bei 130 °C, ein Vorzugsbereich liegt zwischen 10 ± 5 Pa.s bei 150 °C ± 20 °C. Üblicherweise wird die Viskosität mit einem Brookfieldviskosimeter vom Typ Thermosel® bei den angegebenen Temperaturen gemessen. Wenn die Viskosität der Schmelzklebstoff - Zusammensetzung die vorgenannten Viskositätsbereiche aufweist, ist gewährleistet, daß die Schmelze bei Temperaturen zwischen 110 °C und 180 °C vorzugsweise zwischen 130 °C und 150 °C unter Ausschluss von Feuchtigkeit mit einem hinreichend niedrigen Förderdruck durch eine Vielzahl von Düsen mit einem Durchmesser von 0,5 bis 30 mm, vorzugsweise von 2 bis 10 mm ausgetragen werden kann. Dabei wird die Schmelze impulsartig mit Druck beaufschlagt so daß einzelne Tropfen durch die Düsen austreten können. Die Teilchengröße des Granulates wird dabei durch den Düsendurchmesser und die Länge des Druckimpulses sowie die absolute Druckhöhe bestimmt und kann in weiten Grenzen zur Erzielung eines optimalen Granulatdurchmessers variiert werden, üblicherweise erfolgt die Förderung durch eine Kolbenpumpe mit reziprozierenden Kolben. Nach dem Austritt aus den Düsen fallen die Tropfen in einer trockenen Atmosphäre auf eine gekühlte Fläche und beginnen dort zu erstarren. Die Kühlkapazität der Fläche sowie die Erstarrungsgeschwindigkeit der Schmelzklebstoff-Granulate bestimmen dabei die Verweilzeit des Granulates auf der gekühlten Fläche. Anschließend wird das gekühlte Schmelzklebstoff - Granulat von der gekühlten Fläche durch einen Abstreifer oder Rakel von der gekühlten Fläche in die Abfülleinrichtung gelenkt. Ggf. kann das Erstarren des gekühlten Schmelzklebstoff - Granulates durch Nachkristallisieren in einem bewegten, temperierten, feuchtigkeitsdichten Behältnis wie z.B. in einem Wirbelschichtbett, einer Vibrationsrinne oder in einer Drehtrommel vervollständigt werden. Wichtig ist dabei, daß die Granutatteilchen vor dem Abfüllen in die Verpackungen nicht mehr verkleben können.

Die Schmelzklebstoff-Zusammensetzung kann dabei entweder direkt aus dem Herstellbehälter, z.B. einem Tankreaktor oder einem Röhrenreaktor in die Granulier- bzw. Pastilliereinrichtung gefördert werden, die Schmelzklebstoff - Zusammensetzung kann jedoch auch in einem Vorratsbehälter zwischengelagert werden.

Die Erstarrungs- bzw. Kristallisationsgeschwindigkeit der Schmelzklebstoff - Zusammensetzung kann durch die entsprechende Auswahl der polymeren Bausteine in weiten Grenzen beeinflußt werden, so begünstigen rasch kristallisierende Polyesterpolyole oder Polyetherpolyole als Aufbaukomponenten der Polyurethan-Schmelzklebstoffe das Erstarrungs- bzw. Kristallisierungsverhalten günstig. Das Erstarrungs- bzw. Kristallisationsvermögen kann durch im Prinzip bekannte Nucleierungsmittel noch weiter beschleunigt werden. Solche Nucleierungsmittel sind z.B. Titandioxid, hochdisperse Kieselsäure, Russ, Talkum, Kreiden oder kristalline, reaktive oder nicht reaktive Wachse. Der Zusatz der letztgenannten nicht reaktiven Wachse ist z.B. aus G. Habenicht, "Kleben, Grundlagen, Technologie, Anwendungen", 2. Auflage, 1990 im Kapitel 2.7.6 für nichtreaktive Schmelzklebstoffe bekannt. Danach sind wichtige Wachstypen Paraffinwachse mit Schmelzpunkten im Bereich von 45 bis 70 °C und Molgewichten zwischen 225 und 500, mikrokristalline Wachse mit Schmelzpunkten im Bereich von 60 bis 95 °C, synthetische Fischer Tropsch-Wachse mit Schmelzpunkten von 100 bis 115 °C, sowie Polyethylenwachse mit Schmelzbereichen zwischen 85 °C und 140°C und Molgewichten im Bereich von 500 bis 3500. Reaktive Wachse sind beispielsweise aus der US-5472785 bekannt. Derartige reaktive Wachse enthalten Hydroxyl-, Carboxyl-, Isocyanat-, Thiol-, Amino-, Epoxy- oder Vinylgruppen. Die Molekulargewichte derartiger reaktiver Wachse liegen zwischen 400 und 10 000.
Die Erstarrungs- bzw. Kristallisationsgeschwindigkeit der Schmelzklebstoff - Zusammensetzungen soll dabei eine rasche klebfreie Oberfläche der Teilchen nach der Granulierung bzw. Pastilierung bewirken, so daß die SchmelzklebstoffTeilchen auch ohne gesonderte Oberflächenbehandlung eine Blockfestigkeit aufweisen.

Das Zusammenkleben oder Zusammenbacken der Granulatteilchen kann auch durch eine oberflächliche Behandlung der Granulat- bzw. Pastillenoberfläche erfolgen. Dazu werden die Granulat-Teilchen oberflächlich mit einem geeigneten Trennmittel beschichtet, dieses Trennmittel kann beispielsweise Talkum, pyrogene Kieselsäure, Molekularsiebpulver, Russ, Polyethylenpulver, Ethylenvinylacetatpulver oder ein anderes feinteiliges nichtreaktives Polymerpulver sein. Prinzipiell können auch bei leicht erhöhter Temperatur aufschmelzbare Trennmittel wie z.B. Wachse auf die Granulatoberfläche aufgesprüht werden. Beispiele für derartige Wachse sind Polyolefinwachse, insbesondere Polyethylen-Wachse oder auch Fischer-Tropsch-Wachse. Wesentliches Auswahlkriterium für das Beschichtungsmittel ist dabei, daß die Teilchenoberfläche bei Raumtemperatur und bei Lagerungstemperatur nicht klebrig ist und das die Trennmittelschicht bei der Klebstoffapplikation ohne Unverträglichkeiten in das Bindemittelsystem einmischbar ist. Dabei soll diese äußere nicht klebrige Schicht den Kern des Granulates so vollständig bedecken, daß von einer kontinuierlichen oberflächlichen Schicht gesprochen werden kann, d.h. es sind in der Regel mehr als 90% insbesondere mehr als 99% der Granulatoberfläche beschichtet.

Eine Kem-Schalestruktur der Granulat-Teilchen bestehend aus einem reaktiven Kern einer thermoplastischen Polymerzusammensetzung mit reaktiven Gruppen der vorerwähnten Art und einem nicht reaktiven, klebfreien Schalenbereich kann außer durch die vorgenannten Aufstäubungs- bzw. Aufsprühverfahren auch durch Koextrusion hergestellt werden. Eine weitere Möglichkeit ist die chemische Deaktivierung der Oberfläche z.B. beim reaktiven Polyurethansystemen durch die oberflächliche Deaktivierung der reaktiven Teilchen durch Reaktion der Isocyanatgruppen der Polymerzusammensetzung mit Mono- bzw. Polyaminen, wodurch eine klebfreie Harnstoffschale auf den Granulatteilchen erzeugt wird.

Die Erstarrungs- bzw. Kristallisationsgeschwindigkeit der teilchenförmigen Schmelzklebstoff-Zusammensetzung bzw. das Klebfrei-werden der Granulatteilchen ist für deren Verarbeitbarkeit und effiziente Herstellung dabei von sehr großer Bedeutung. Dieses Verhalten kann mit messtechnischer Hilfe dadurch optimiert werden, daß die Kristallisations- bzw. Erstarrungsgeschwindigkeit oder das Klebfrei- werden der zu optimierenden Schmelzklebstoff-Zusammensetzung durch thermische Methoden messend verfolgt wird. Hierzu eignen sich beispielsweise thermoanalytische Methoden wie Differentialthermoanalyse, insbesondere DSC (Differential Scanning Calorimetry), Dynamisch Mechanische Thermoanalyse (DMTA), Thermomechanische Analyse (TMA) sowie durch das Messen des Elastizitäts- bzw. Speichermoduls in Abhängigkeit von Abkühlzeit bzw. Abkühltemperatur. Im einfachsten Fall kann das Erstarrungsverhalten auch über die Bestimmung der Shore A - Härte über die Abkühlzeit bzw. Abkühltemperatur bestimmt und optimiert werden.
Ein derartiges Verfahren ist z.B. Gegenstand der DIN 53505. Danach wird beispielsweise die Änderung der Shore A - Härte unter isothermischen Bedingungen in vorbestimmten Zeitintervallen gemessen, bis ein Maximum der Härte erhalten wird. Die Shore A-Härte wird dann gegen die Zeit aufgetragen um eine Kurve der Kristallisationsrate zu erhalten, siehe hierzu auch Adhesives Age, Januar 2001, Seite 23.

Das Polyurethanbindemittel der erfindungsgemäßen teilchenförmigen reaktiven Schmelzklebstoffe - Zusammensetzungen ist dabei vorzugsweise in an sich bekannter Form aus monomeren Diisocyanaten und Polyolen aufgebaut.

Monomere Diisocyanate im Sinne dieser Erfindung sind solche aromatischen, aliphatischen oder cycloaliphatischen Diisocyanate, deren Molekulargewicht kleiner als 500 ist. Beispiele für geeignete aromatische Diisocyanate sind alle Isomeren des Toluylendiisocyanats (TDI) entweder in isomerenreiner Form oder als Mischung mehrerer Isomerer, Naphthalin-1,5-diisocyanat (NDI), Naphthalin-1,4-diisocyanat (NDI), Diphenylmethan-4,4 '-diisocyanat (MDI), Diphenylmethan-2,4'-diisocyanat sowie Mischungen des 4,4'-Diphenylmethandiisocyanats mit dem 2,4'-Isomeren, Xylylen-diisocyanat (XDI), 4,4'-Diphenyl-dimethylmethandiisocyanat, Di- und Tetraalkyl-diphenylmethandiisocyanat, 4,4'-Dibenzyldiisocyanat, 1,3-Phenylendiisocyanat, 1,4-Phenylendiisocyanat. Beispiele für geeignete cycloaliphatische Diisocyanate sind die Hydrierungsprodukte der vorgenannten aromatischen Diisocyanate wie z.B. das 4,4'-Dicyclohexylmethandiisocyanat (H₁₂MDI), 1-Isocyanatomethyl-3-isocyanato-1,5,5-trimethyl-cyclohexan (Isophorondüsocyanat, IPDI), Cyclohexan-1,4-diisocyanat, hydriertes Xylylen-diisocyanat (H₆XDI), 1-Methyl-2,4-düsocyanato-cyclohexan, m-oder p-Tetramethylxylendüsocyanat (m-TMXDI, p-TMXDI) und Dimerfettsäure-Diisocyanat. Beispiele für aliphatische Diisocyanate sind Tetramethoxybutan-1,4-düsocyanat, Butan-1,4-diisocyanat, Hexan-1,6-diisocyanat (HDI), 1,6-Düsocyanato-2,2,4-trimethylhexan, 1 ,6-Diisocyanato-2,4,4-trimethylhexan, Lysindiisocyanat sowie 1, 12-Dodecandiisocyanat (C₁₂DI).

Als Polyole können dabei eine Vielzahl von höhermolekularen Polyhydroxyverbindungen verwendet werden. Als Polyole eignen sich vorzugsweise die bei Raumtemperatur flüssigen, glasartig fest/amorphen oder kristallinen Polyhydroxyverbindungen mit zwei bzw. drei Hydroxylgruppen pro Molekül im Molekulargewichts-Bereich von 400 bis 20000, vorzugsweise im Bereich von 1000 bis 6000. Beispiele sind di- und/oder trifunktionelle Polypropylenglycole, es können auch statistische und/oder Blockcopolymere des Ethylenoxids und Propylenoxids eingesetzt werden. Eine weitere Gruppe von vorzugsweise einzusetzenden Polyethem sind die Polytetramethylenglykole (Poly(oxytetramethylen)glycol, Poly-THF), die z.B. durch die saure Polymerisation von Tetrahydrofuran hergestellt werden, dabei liegt der Molekulargewichts-Bereich der Polytetramethylenglykole zwischen 600 und 6000, vorzugsweise im Bereich von 800 bis 5000.
Weiterhin sind als Polyole die flüssigen, glasartig amorphen oder kristallinen Polyester geeignet, die durch Kondensation von Di- bzw. Tricarbonsäuren, wie z.B. Adipinsäure, Sebacinsäure, Glutarsäure, Azelainsäure Korksäure, Undecandisäure Dodecandisäure, 3,3-Dimethylglutarsäure, Terephthalsäure, Isophthalsäure, Hexahydrophthalsäure, Dimerfettsäure oder deren Mischungen mit niedermolekularen Diolen bzw. Triolen wie z.B. Ethylenglycol, Propylenglycol, Diethylenglycol, Triethylenglycol, Dipropylenglycol, 1,4-Butandiol, 1,6-Hexandiol, 1,8-Octandiol, 1,10-Decandiol, 1,12-dodecandiol, Dimerfettalkohol, Glycerin, Trimethylolpropan oder deren Mischungen hergestellt werden können.
Eine weitere Gruppe der erfindungsgemäß einzusetzenden Polyole sind die Polyester auf der Basis von ε-Caprolacton, auch "Polycaprolactone" genannt.
Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate. Auch die Hydroxyfunktionellen Polybutadiene, wie sie z.B. unter dem Handelsnamen "Poly-bd" erhältlich sind, können für die erfindungsgemäßen Zusammensetzungen als Polyole eingesetzt werden.

Weiterhin eignen sich als Polyole lineare und/oder schwach verzweigte Acrylester-Copolymer-Polyole, die beispielsweise durch die radikalische Copolymerisation von Acrylsäureestern, bzw. Methacrylsäureestern mit Hydroxy-funktionellen Acrylsäure- und/oder Methacrylsäure-Verbindungen wie Hydroxyethyl(meth)acrylat oder Hydroxypropyl(meth)acrylat hergestellt werden können. Wegen dieser Herstellungsweise sind die Hydroxylgruppen bei diesen Polyolen in der Regel statistisch verteilt, so daß es sich hierbei entweder um lineare oder schwach verzweigte Polyole mit einer durchschnittlichen OH-Funktionalität handelt. Obwohl für die Polyole die difunktionellen Verbindungen bevorzugt sind, können auch, zumindest in untergeordneten Mengen, höherfunktionelle Polyole verwendet werden.

Bei der Verwendung der erfindungsgemäßen Polyurethan-Zusammensetzungen als teilchenförmige reaktive Schmelzklebstoffe werden die Polyolkomponenten so ausgewählt, daß die Zusammensetzung bei Raumtemperatur fest ist, unter den Extrusionsbedingungen in Granulatform schnell erstarrt und bei Raumtemperatur oder Lagertemperatur eine nicht klebrige Oberfläche aufweist. Dies kann einerseits dadurch geschehen, daß feste, amorphe und/oder feste, kristalline Polyhydroxyverbindungen eingesetzt werden, es kann jedoch auch dadurch geschehen, daß ein erheblicher Anteil an kurzkettigen Polyhydroxyverbindungen mit verwendet wird, da durch die hohe Konzentration an Urethangruppierungen diese Zusammensetzungen ebenfalls bei Raumtemperatur fest sind und beim Abkühlen sehr rasch erstarren. Auswahlkriterien für die geeigneten Polyole finden sich z.B. in dem vorgenannten Aufsatz von H. F. Huber und H. Müller oder im Vortragsskript der gleichen Autoren ("Leitlinien für die Formulierung von reaktiven Schmelzklebstoffen", 11. Münchener Klebstoff- und Veredelungsseminar, Oktober 1986).

Neben den vorgenannten Polyurethan - Zusammensetzungen mit reaktiven Isocyanat - Endgruppen können die erfindungsgemäßen Schmelzklebstoffe als feuchtigkeitsreaktive Gruppen auch Silanol-, Alkoxysilan-, Acetoxysilan-, Silazan-, Oximatosilan- Gruppen oder deren Mischungen enthalten. Derartige reaktive Polymere können durch Umsetzung der entsprechenden Isocyanat-terminierten Prepolymeren mit amino-, mercapto-, oder hydroxyfunktionellen Silanen hergestellt werden. Prinzipiell können sie auch auf anderem Weg durch polymeranaloge Umsetzungen von Polyaminoamiden mit amino-, mercapto-, oder hydroxyfunktionellen Silanen hergestellt werden. Eine weitere Möglichkeit ist die Verwendung entsprechender (Meth)acrylatcopolymerer mit eingebautem reaktiven Isocyanatgruppen oder Silangruppen.
Eine weitere Möglichkeit der erfindungsgemäß in Granulatform herzustellenden oder zu verwendenden Schmelzklebstoffe sind sogenannte Hybridsysteme, die neben den vorgenannten feuchtigkeitshärtenden Gruppen noch durch Strahlung härtbare Gruppen enthalten. Diese Gruppen können entweder olefinisch ungesättigte Gruppen insbesondere Acrylat- oder Methacrylatgruppen oder auch Epoxidgruppen sein. Im Falle der Zusammensetzungen, die Polymere oder Monomere mit olefinisch ungesättigten Gruppen enthalten, muß die Zusammensetzung zusätzlich einen strahlungsaktivierbaren Initiator enthalten, der freie Radikale generieren kann. Im Falle der epoxidgruppenhaltigen Zusammensetzungen ist dieser strahlungsaktivierbare Initiator auszuwählen aus der Gruppe der strahlungsaktivierbaren Ammonium-, Sulfonium- oder Phosphoniumverbindungen. Beide Arten von Photoinitiatoren sind im Prinzip bekannt.

Bei den Polyurethanschmelzklebstoff - Zusammensetzungen mit freien Isocyanatgruppen, kann in besonders bevorzugter Ausführungsform eine Polyurethan - Zusammensetzung mit keinem bzw. sehr niedrigem Gehalt an monomeren, niedermolekularen Diisocyanaten eingesetzt werden. Derartige Schmelzklebstoff - Zusammensetzungen sind z.B. Gegenstand der noch unveröffentlichten PCT/EP00/11771. Die Lehre dieser Anmeldung in Bezug auf die Zusammensetzungen mit niedrigem Restmonomergehalt ist ausdrücklich Gegenstand der vorliegenden Anmeldung.

Die erfindungsgemäßen teilchenförmigen Zusammensetzungen können ggf. zusätzlich Katalysatoren enthalten, die die Bildung des Polyurethan - Prepolymeren bei seiner Herstellung und / oder die Feuchtigkeitsvernetzung nach der Applikation des Klebstoffes beschleunigen. Als erfindungsgemäß einsetzbare Katalysatoren eignen sich dabei insbesondere die in der vorgenannten PCT/EP 00/11771 auf Seite 11 bis 13 genannten Katalysatoren in den dort angegebenen Mengen.

Weiterhin kann die erfindungsgemäße Zusammensetzung ggf. zusätzlich Stabilisatoren, haftvermittelnde Zusätze wie klebrigmachende Harze, Füllstoffe, Pigmente, Weichmacher und/oder nichtreaktive thermoplastische Polymere enthalten.
Als "Stabilisatoren" im Sinne dieser Erfindung sind einerseits Stabilisatoren zu verstehen, die eine Viskositätsstabilität des Polyurethanprepolymeren während der Herstellung, Lagerung bzw. Applikation bewirken. Hierfür sind z.B. monofunktionelle Carbonsäurechloride, monofunktionelle hochreaktive Isocyanate, aber auch nicht-korrosive anorganische Säuren geeignet, beispielhaft seien genannt Benzoylchlorid, Toluolsulfonylisocyanat, Phosphorsäure oder phosphorige Säure. Des weiteren sind als Stabilisatoren im Sinne dieser Erfindung Antioxidantien, UV-Stabilisatoren oder Hydrolyse-Stabilisatoren zu verstehen. Die Auswahl dieser Stabilisatoren richtet sich zum einen nach den Hauptkomponenten der Zusammensetzung und zum anderen nach den Applikationsbedingungen sowie den zu erwartenden Belastungen des ausgehärteten Produktes. Wenn das Polyurethanprepolymer überwiegend aus Polyetherbausteinen aufgebaut ist, sind hauptsächlich Antioxidantien, ggf. in Kombination mit UV-Schutzmitteln, notwendig. Beispiele hierfür sind die handelsüblichen sterisch gehinderten Phenole und/oder Thioether und/oder substituierten Benzotriazole oder die sterisch gehinderten Amine vom Typ des HALS ("Hindered Amine Light Stabilizer").

Bestehen wesentliche Bestandteile des Polyurethanprepolymers aus Polyesterbausteinen, können Hydrolyse-Stabilisatoren, z.B. vom Carbodiimid-Typ, eingesetzt werden.

Werden die erfindungsgemäßen Zusammensetzungen als Kaschierklebstoffe oder Schmelzklebstoffe eingesetzt, so können diese noch klebrigmachende Harze, wie z.B. Abietinsäure, Abietinsäureester, Terpenharze, Terpenphenolharze oder Kohlenwasserstoffharze sowie Füllstoffe (z.B. Silikate, Talk, Calciumcarbonate, Tone oder Ruß), Weichmacher (z.B. Phthalate) oder Thixotropiermittel (z.B.
Bentone, pyrogene Kieselsäuren, Harnstoffderivate, fibrillierte oder Pulp-Kurzfasern) oder Farbpasten bzw. Pigmente enthalten.
Als thermoplastische Polymere werden dabei bevorzugt niedermolekulare Polymere von ethylenisch ungesättigten Monomeren verwendet. Konkrete Beispiele hierfür sind (Co)polymere aus einem oder mehreren der folgenden Monomeren: C₁-C₁₈-Alkylester der Acrylsäure oder Methacrylsäure, Acrylsäure, Methacrylsäure, Ethylen, Vinylacetat, Vinylpropionat, Vinylversatät, Vinylether, Alkylfumarate, Alkylmaleate, Styrol, Alkylstyrol, Acrylnitrkil und / oder Butadien oder Isopren. Niedriges Molekulargewicht bedeutet in diesem Zusammenhang ein durchschnittliches Molekulargewicht unterhalb von 60 000, vorzugsweise liegt das Molekulargewicht derartiger thermoplastischer Polymeren zwischen 10 000 und 40 000.

Die erfindungsgemäßen feuchtigkeitsreaktiven Schmelzklebstoffe in Teilchenform sind besonders geeignet zur einfachen Verbindung von flächigen Gebilden oder Formteilen, da das Homogenisieren und Aufschmelzen des reaktiven Granulates oder Pulvers mit herkömmlichen heizbaren Mischaggregaten wie z.B. Extrudern (wegen ihrer hohen Scherung) vorgenommen werden kann. Die Extrusion des homogenisierten reaktiven thermoplastischen Gemisches erfolgt dann ggf. durch eine formgebende Düse, mit einer Auftragswalze, im Sprühverfahren oder mit einem Rakel auf mindestens eine Oberfläche eines zu fügenden Flächengebildes oder Formteils. Das zweite, dazu passende, Flächengebilde oder Formteil wird auf die aufgebrachte Schicht des reaktiven Gemisches gefügt und die beiden Fügeteile ggf. kurzfristig verpresst und /oder mechanisch fixiert. Nach dem Abkühlen und Erstarren der Klebstoffschicht auf Temperaturen unterhalb des Schmelzbereiches ist die Anfangsfestigkeit der Verklebung durch die Erstarrung des Schmelzklebstoffes erzielt, die Endfestigkeit wird nach Aushärtung durch Reaktion mit der umgebenden Feuchtigkeit erreicht. Ggf. kann bei den Hybridsystemen ein Teil der Aushärtung durch Bestrahlung der Klebstoffschicht mit elektromagnetischer Bestrahlung in Form von UV-, Elektronen- oder NIR-(nahes Infrarot) Strahlung erfolgen. Wenn ein Fügeteil für die elektromagnetische Strahlung transparent ist, kann die elektromagnetische Bestrahlung auch nach dem Fügen der Teile erfolgen.

Die erfindungsgemäßen feuchtigkeitsreaktiven Schmelzklebstoffe in Teilchenform lassen sich auch auf besonders einfache Art und Weise mit anderen teilchenförmigen Schmelzklebstoff- Zusammensetzungen in reaktiver oder nicht reaktiver Form als Gemenge mischen und applizieren. Dadurch können die Verarbeitungs-, Abbinde- und Härtungseigenschaften ohne große Mühe in weiten Grenzen variiert werden. Ggf. können auch Farbpigmente oder Katalysatoren in Granulatform oder Pulverform zugefügt werden. Hierdurch kann ohne großen anlagetechnischen Aufwand dem Verarbeiter die Möglichkeit gegeben werden, reaktive Schmelzklebstoff - Zusammensetzungen in ihren Verarbeitungseigenschaften den konkreten Anwendungsfällen hochflexibel anzupassen.

So kann der Anwender das Abbindeverhalten der Schmelzklebstoff-Zusammensetzungen auch den klimatischen Bedingungen anpassen, d.h. in kalten, trockenen Wintermonaten stärker beschleunigte Zusammensetzungen durch Zusatz eines Beschleuniger - Granulates entsprechend modifizieren, ohne dass die Hauptkomponente der Schmelzklebstoff-Zusammensetzung verändert werden muß. Weiterhin ist ein schneller Wechsel von reaktiven zu nicht reaktiven Schmelzklebstoffen in Teilchenform auf der gleichen Applikationslinie möglich, ohne dass die Anlage zwischendurch gereinigt werden muß.

Das erfindungsgemäße Verfahren zum Verbinden von flächigen Gebilden oder Formteilen mit Hilfe der reaktiven Schmelzklebstoff - Granulate bzw. - Pulver eignet sich insbesondere in der holzverarbeitenden Industrie beim Herstellen von Holz- und Möbelbauteilen oder Fensterprofilen zur Verbindung und Beschichtung von Holzwerkstoffen und holzähnlichen Werkstoffen, wie Spanplatte, MDF (Medium Density Fibreboard), HDF (High Density Fibreboard), OSB (oriented structural board) und Flüssigholz untereinander oder mit Kunststoffen und Metallen.
Bei der Profilummantelung können die erfindungsgemäßen teilchenförmigen Schmelzklebstoffe zur Verbindung von profilierten Kemmaterialien aus Holz, Spanplatte, MDF, Flüssigholz, Aluminium und PVC mit Papierfolien, Kunstoffolien und Furnieren verwendet werden. Weitere Beispiele sind die Kanten-Verklebung bzw. Bearbeitung (Gerade Kante, Softforming und Postforming) von flächenbeschichteten Spanplatten, MDF- Platten mit Kantenmaterialien aus Massivholz, Furnier, beharzten Papieren, Kunstoffkanten aus ABS, Polypropylen, Polyacrylat und PVC, sowie Aluminiumkanten, oder durch das Verfahren der Flächen - Verklebung (flat lamiation) zur Verbindung von flächigen ebenen Substraten, aus Holz, holzähnlichen Materialien, beharzten Papieren, Kunststoffen und Metallen. Dieses Verfahren eignet sich auch zum effizienten Herstellen anderer Baugruppen wie z.B. Solarkollektoren, Fassadenelementen für Bauwerke, Gießharzscheiben oder auch zur Herstellung von 2- oder Mehrscheiben - Isoliergläsern. Weiterhin eignet sich das erfindungsgemäße Verfahren zur Kaschierung von Bauteilen oder Folien mit entsprechenden Kunststoff-, Metall-, oder Papierfolien und Laminaten, sowie zur Kaschierung oder Verklebung von textilen Flächengebilden in Form von Non-wovens, Vliesen, Geweben oder Gewirken und dergleichen. Weitere Beispiele für den erfindungsgemäßen Einsatz der reaktiven Schmelzklebstoffe in Teilchenform sind im Bereich des Fahrzeugbaus die Montage - Anwendungen wie Clips- Klebungen, Kaschierverklebungen für Innenraumverkleidung oder Armaturenbretter und Hutablagen im Auto, in der Buchbinderei kann die Buchrückenbeschichtung mit den erfindungsgemäßen reaktiven teilchenförmigen Schmelzklebstoffen erfolgen. Weitere industrielle Anwendungen der erfindungsgemäßen Verfahren sind die Verklebung von Filterbauteilen, die flächige Laminierung von Bauteilen im Caravan-, Wohnwagen, und Containerbau oder bei der Fertigung von Sportgeräten (z.B. Skiherstellung). Anwendungen in der Textillaminierung können auch das Verkleben von semipermeablen Membranen mit anderen textilen Materialien beinhalten. Weitere erfindungsgemäße Anmeldungen sind der Steckerverguß bzw. das Herstellen von Formteilen für die Kabel-, Elektro- oder Elektronikindustrie (siehe hierzu die DE 4446027 A) sowie in der Schuhherstellung die Verklebung von Sohlen mit dem Schuhoberteil oder zur Verklebung von Komponenten des Schuhs. Weiterhin können die erfindungsgemäßen Granulate zur Herstellung von Trockenmitteln gemäß der Offenbarung der DE 199 52089 C1 verwendet werden.

Nachfolgend soll die Erfindung an Hand einiger Prinzipversuche dargestellt werden, wobei die Auswahl der Beispiele keine Beschränkung des Umfanges des Erfindungsgegenstandes darstellen soll. Sie zeigen nur in modellhafter Weise die Wirkungsweise der erfindungsgemäß zu verwendenden teilchenförmigen Schmelzklebstoffe in Granulat-, Pastillen-, oder Pulverform.
In den nachfolgenden Beispielen sind alle Mengenangaben Gewichtsprozente bzw. Gewichtsteile wenn nicht angegeben.

### Beispiele

### Beispiel 1

Aus einer Polyolmischung enthaltend 21,4 Gew.% eines Polyesterdiols, OH-Zahl 32, Erweichungspunkt (Ring and Ball, ASTM E 28) 72 °C, 26,2 Gew.% eines Polyesterdiols, OH-Zahl 27, Erweichungspunkt (Ring and Ball) 62 °C, 22,7 Gew.% eines Polyesterdiols, OH-Zahl 33, Erweichungspunkt (Ring and Ball) 76 °C, 10,2 Gew.% eines Polyesterdiols, OH-Zahl 56, T_{g} < -20 °C und einem Polyetherdiol (Polypropylenglycol), OH-Zahl 112, 10,26 Gew.% Diphenylmethandiisocyanat sowie 5,1 Gew.% EVA (VA-Anteil28%) wurde unter Zusatz von 0,04 Gew.% Benzoylchlorid nach an sich bekannter Methode eine Prepolymermischung als Basismaterial für einen reaktiven Schmelzklebstoff mit reaktiven Isocyanatgruppen hergestellt. NCO-Gehalt 1,13%, Viskosität 24 Pa.s bei 130 °C.

### Unter Variation der Polyesterpolyole und der Polyetherpolyole sowie der OH:

NCO-Verhältnisse wurden weitere reaktive Polyurethanschmelzklebstoff - Zusammensetzungen hergestellt.

Von diesen Schmelzklebstoff-Zusammensetzungen wurde die Erstarrungsgeschwindigkeit durch Messen der Shore A - Härte in Abhängigkeit von der Zeit bestimmt. Die Ergebnisse sind in der nachfolgenden Tabelle 1 zusammengefasst.

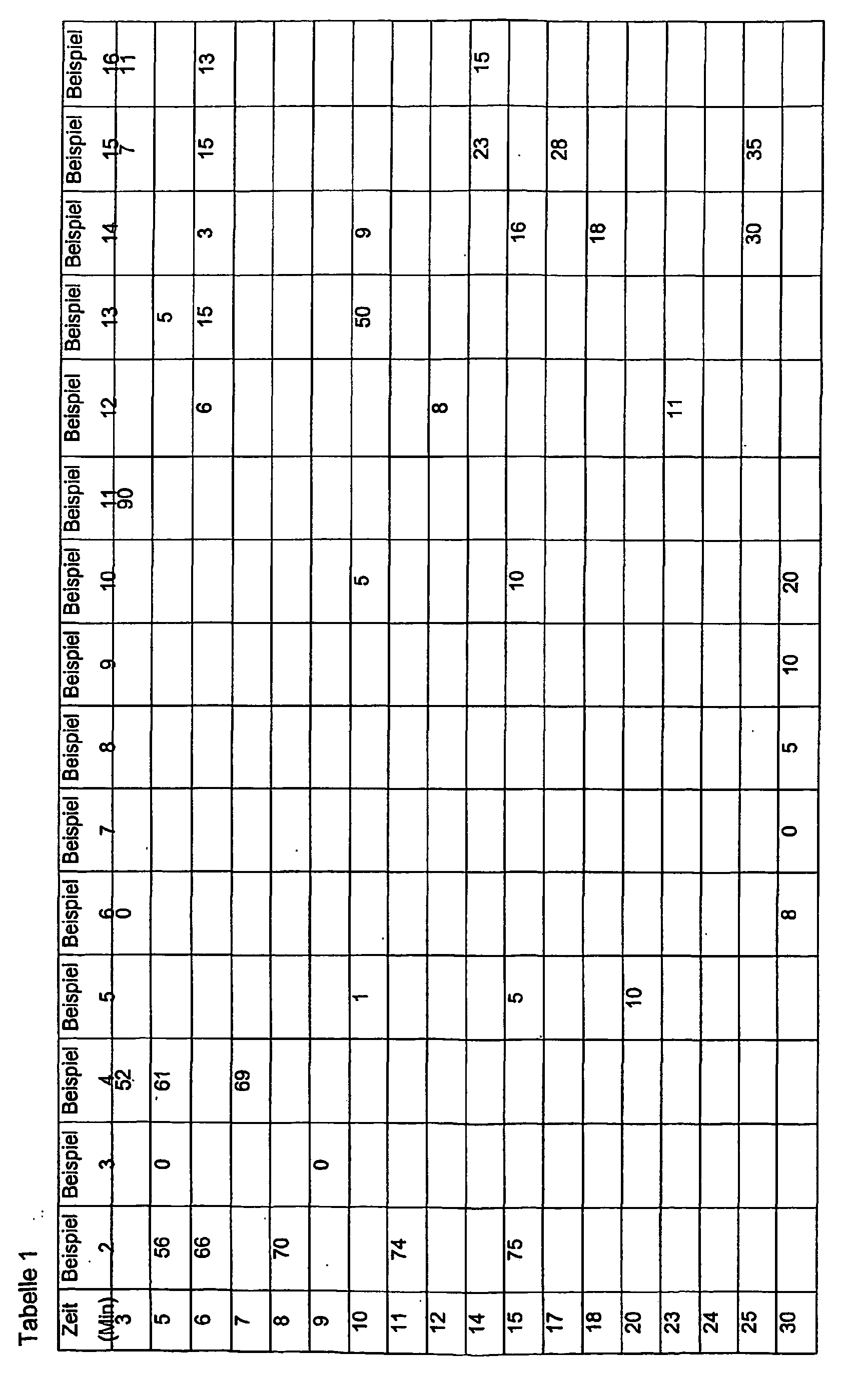

Für die Granulierungs- bzw. Pastillierungsversuche wurden diejenigen Zusammensetzungen ausgewählt, die nach 15 Minuten mindestens eine Shore - A - Härte von 15 aufwiesen (Beispiele 2, 4, 13, 14 - 16). Für die Pastillierung wurde aus einem beheizten Vorratsbehälter die Klebstoff-Schmelze durch einen Düsenbalken auf eine gekühlte Fläche aufgebracht. Die Dosierung erfolgte dabei über eine Kolbenpumpe, der Düsenbalken und die gekühlte Platte befanden sich in einer abgeschlossenen Kammer unter Feuchtigkeitsausschluss. Nach dem Erstarren der Pastillen wurden diese von der gekühlten Platte abgestreift und in einen Auffangbehälter gefördert, der anschließend feuchtigkeitsdicht verschlossen wurde. Das Granulat hatte einen mittleren Teilchendurchmesser von 7±1 mm.

Das Granulat wurde anschließend einem Langzeit-Lagertest unterworfen sowie auf seine klebetechnischen Eigenschaften im Vergleich mit einem herkömmlichen Schmelzklebstoff analoger Zusammensetzung in Bulkform verglichen.

Die Lagerstabilität des Granulates aus Beispiel 2 wurde an Hand der Schmelzviskosität, der offenen Zeit und der Abbindezeit beurteilt. Wie aus den nachfolgenden Daten ersichtlich, nimmt die Viskosität des Granulates nur sehr geringfügig zu, auch offene Zeit und Abbindezeit des Schmelzklebstoffes verändem sich nur in engen Grenzen, so daß der Schmelzklebstoff in granulierter Form eine ausgezeichnete Lagerstabilität aufweist. Im Blocktest blieb das Granulat selbst bei Temperaturen bis 45 °C schüttfähig, ab 50 °C wurde geringfügiges Anhaften der Granulatteilchen beobachtet, ab 60 °C begann das Produkt zu schmelzen.

| Zeit | Viskosität bei 130 °C | offene Zeit | Abbindezeit |
|---|---|---|---|
| sofort | 21.600 mPa.s | 50 s | 38 s |
| 2 Wochen | 27.100 mPa.s | 60 s | 45 s |
| 3 Wochen | 29.500 mPa.s | n.a. | n.a. |
| 4 Monate | 25.000 mPa.s | 65 s | 65 s |

Das Granulat des Beispiels 2 wurde auf seine Verarbeitungsfähigkeit bei der Fensterprofilummantelung getestet:

### Versuchsbedingungen:

| | |
|---|---|
| Maschine: | Friz PU 30 |
| Profil: | Aluplast weiß |
| Folie: | Renolit Standard |
| Primer: | 6B-23 (Fa. Henkel Dorus) |
| Vorschub: | 15 m/min |
| Rakeltemperatur: | 130 °C |

### Verarbeitung:

Das Granulat wurde direkt in das Rakel gegeben und dort aufgeschmolzen. Die Verarbeitung über das Rakel erfolgte problemlos ohne Auffälligkeiten.

### Prüfergebnisse

### Schälfestigkeitsaufbau (N/mm) nach:

| | |
|---|---|
| 10 min | 1,1 S, KB |
| 1 h | 1,3 S, KB |
| 2 h | 1,4 S, KB |
| 4 h | 1,5 S, KB |
| 8 h | 2,0 S, KB |
| 1 d | 3,5 FR |
| 2d | 4,2 FR |
| >7d | 4,5 FR |

### Erklärung: S - schält, KB - Kohäsionsbruch, FR - Folienriss ohne Schälen

| | |
|---|---|
| Schälfestigkeit nach Alterung: | 240 h bei 70 °C /95 % rel. Luftfeuchtigkeit |
| Schälwert nach Alterung: | 3,3 N/mm, schält, KB |
| Vergleichswert 1 | |
| Schälwert nach Alterung: | 3,8 N/mm, schält, KB |

Diese Versuchsergebnisse zeigen, daß der Schmelzklebstoff in Granulatform genauso verarbeitbar ist, wie ein Schmelzklebstoff gleicher Zusammensetzung in kompakter Form (Vergleichswert 1). Auch das Alterungsverhalten des granulatförmigen Schmelzklebstoffes führt zu vergleichbaren Ergebnissen wie eine gleichartiger kompakter Schmelzklebstoff (Vergleichswert 1).

In gleicher Weise wurden die Granulate der Beispiele 13 und 14 für die Anwendung der Fensterprofilummantelung getestet. Dabei wurden die folgenden Ergebnisse erzielt:

| Kennwertprüfung | Beispiel 13 | Beispiel 14 |
|---|---|---|
| Viskosität (130 °C, Pa.s) | 25,5 | 27,0 |
| Offene Zeit (sec) | 32 | 34 |
| Abbindezeit (sec) | 10 | 8 |
| Viskosität (Sandmeyer) 130 °C, Pa.s) | 86,1 | 28,6 |

### Ummantelungsversuch:

| | |
|---|---|
| Maschine: | DTC-2, Friz |
| Vorschub: | 15 m/min |
| Temperatur Rakel: | 130 °C |
| Profiloberflächentemperatur: | 48 - 51 °C |
| Profil: | Aluplast |
| Folie: | Renolit MBAS 2 |
| Klebstoffauftrag: | 50 g/min |
| Prüfungsergebnisse: | Schälfestigkeit (N/20 mm) nach |

| Klebstoffe | 10 min | 1 h | 4h | 8h | 1d | 2d | 7d |
|---|---|---|---|---|---|---|---|
| Beispiel 13 | 30 | 32 | 32 | 34 | 64 | 78 FR | 78 FR |
| Vergleich 2 | 23 | 23 | 30 | 53 | 92 FR | --- | 92 FR |
| Beispiel 14 | 17 | 12 | 12 | 11 | 20 | 33 | 42 |
| Vergleich 3 | 10 | 10 | 9 | 9 | 9 | 28 | 55 |

| | | | | | | | |
|---|---|---|---|---|---|---|---|
| Alle Schälwerte: schält unter Kohäsionsbruch FR: Folienriss ohne zu schälen | | | | | | | |

Auch die Granulate der Beispiele 13 und 14 zeigen sehr ähnliche Kennwerte im Vergleich zu herkömmlichen kompakten Schmelzklebstoffen gleicher Zusammensetzung (Vergleich 2 und 3).

Aus den vorstehenden Versuchsergebnissen ist ersichtlich, daß die erfindungsgemäßen Schmelzklebstoffe in Granulatform vergleichbare Verarbeitungseigenschaften und Festigkeitseigenschaften aufweisen wie die herkömmlichen reaktiven Schmelzklebstoffe ähnlicher Zusammensetzung in kompakter Form. Ihr Vorteil gegenüber den analogen Zusammensetzungen in Bulkform ist jedoch die vereinfachte Handhabung und Lagerung der teilchenförmigen reaktiven Schmelzklebstoffe.

## Patentansprüche

1. Verfahren zur Herstellung eines feuchtigkeitshärtenden Schmelzklebstoffgranulates, wobei zumindest ein Teil der polymeren Bestandteile der einkomponentigen Schmelzlclebstoff-Zusammensetzung feuchtigkeitsreaktive Gruppen enthält und die Oberfläche der Granulatteilchen bei Temperaturen unterhalb von 35 °C nicht klebrig ist, **dadurch gekennzeichnet, dass** man die folgenden wesentlichen Verfahrensschritte durchführt:
a) Aufschmelzen der Schmelzklebstoff-Zusammensetzung und Erwärmen der Schmelze auf Temperaturen zwischen 110 °C und 180 °C, unter Ausschluss von Feuchtigkeit,
b) Extrudieren dieser Schmelze durch Düsen mit einem Durchmesser von 0,5 mm bis 30 mm auf eine gekühlte Fläche unter Feuchtigkeitsausschluss,
c) Abkühlen des Granulates unter Feuchtigkeitsausschluss, wobei die Zusammensetzung erstarrt,
d) Abnehmen des gekühlten Schmelzklebstoff-Granulates und, nachdem die Granulatteilchen soweit verfestigt sind, dass sie im nachfolgenden Schritt nicht mehr verkleben,
e) Abfüllen des Granulates unter Feuchtigkeitsausschluss in feuchtigkeitsdichte Verpackungen.

2. Verfahren nach Anspruch 1, **dadurch gekennzeichnet, dass** die feuchtigkeitsreaktiven Gruppen der Klebstoff-Zusammensetzung ausgewählt sind aus Isocyanat-, Silanol-, Alkoxysilan-, Acetoxysilan-, Silazan-, Oximatosilan-gruppen oder deren Mischungen.

3. Verfahren nach Anspruch 1 oder 2, **dadurch gekennzeichnet, dass** die Klebstoff-Zusammensetzung zusätzlich strahlungshärtbare Polymere oder Monomere enthält.

4. Verfahren nach Anspruch 3, **dadurch gekennzeichnet, dass** die strahlungshärtbaren Polymere oder Monomere olefinisch ungesättigte Gruppen und/oder Epoxidgruppen enthalten und ggf. strahlungsaktivierbare Initiatoren oder Katalysatoren.

5. Verfahren nach mindestens einem der vorhergehenden Ansprüche **gekennzeichnet durch** eine Teilchengröße der Granulate von 0,5 mm bis 30 mm, vorzugsweise von 2 bis 10 mm.

6. Verfahren nach einem der Ansprüche 1 bis 5, **dadurch gekennzeichnet, dass** die Viskosität der Schmelze bei 150 ± 20 °C 10 ± 5 Pa s, gemessen mit einem Brookfield-Viskosimeter mit Thermosel-Ausrüstung, beträgt.

7. Verfahren nach einem der Ansprüche 1 bis 6, **dadurch gekennzeichnet, dass** das Granulat nach dem Schritt b) mit klebrigkeitsvermindernden Agentien behandelt wird.

8. Verfahren nach Anspruch 7, **dadurch gekennzeichnet, dass** die klebrigkeitsvermindernden Agentien ausgewählt werden aus feinteiligen Stäuben in der Form von Ruß, hochdisperser Kieselsäure, Polyethylenpulver oder Talkum oder aus aufsprühbaren oder in fester Form aufstäubbaren, niedrig schmelzenden Flüssigkeiten wie Wachsen oder Paraffinen.

9. Einkomponentige Schmelzklebstoffzusammensetzung in Form eines Granulates oder Pulver, wobei zumindest ein Teil der polymeren Bestandteile feuchtigkeitsreaktive Gruppen enthält und die Oberfläche der Granulat-oder Pulverteilchen bei Temperaturen unterhalb von 35° C nicht klebrig ist und zusätzlich strahlungshärtbare Polymere oder Monomere enthalten sind, erhältlich nach einem Verfahren gemäß Anspruch 3 bis 8.

10. Schmelzklebstoffzusammensetzung nach Anspruch 9, **dadurch gekennzeichnet, dass** die strahlungshärtbaren Polymere oder Monomere olefinisch ungesättigte Gruppen und/oder Epoxydgruppen enthalten und ggf. strahlungsaktivierbare Initiatoren und Katalysatoren.

11. Schmelzklebstoffzusammensetzung nach einem der Ansprüche 9 oder 10, **dadurch gekennzeichnet, dass** die Teilchengröße der Granulate von 0,5 mm bis 30 mm oder die Teilchengröße der Pulver von 5 µm bis 500 µm beträgt.

12. Schmelzklebstoffzusammensetzung nach einem der Ansprüche 9 bis 11, **dadurch gekennzeichnet, dass** die Teilchen nicht miteinander verkleben und bei Lagerung rieselfähig oder schüttfähig bleiben.

13. Verfahren zum Verbinden von flächigen Gebilden oder Formteilen **gekennzeichnet durch** die folgenden wesentlichen Verfahrensschritte
a) Homogenisieren und Aufschmelzen des reaktiven Granulates gewonnen nach mindestens einem der Ansprüche 9 bis 12, unter Ausschluss von Feuchtigkeit und/oder Sauerstoff unter Verwendung eines heizbaren Mischaggregates,
b) Extrusion des homogenisierten reaktiven thermoplastischen Gemisches auf mindestens eine Oberfläche eines Flächengebildes oder Formteils,
c) Fügen eines zweiten dazu passenden Flächengebildes oder Formteils auf die aufgebrachte Schicht des reaktiven Gemisches,
d) ggf. mechanisches Fixieren der gefügten Flächengebilde oder Formteile,
e) Abkühlen des so gebildeten Verbundsystems auf Raumtemperatur, wobei die reaktive Schmelzklebstoff-Zusammensetzung erstarrt und unter Vernetzung aushärtet.

14. Verfahren nach Anspruch 13, **dadurch gekennzeichnet, dass** die reaktive Schmelze im Schritt b) mit Hilfe einer beheizten Auftragswalze oder einem Rakel oder durch Sprühauftrag auf mindestens eine der zu fügenden Substratoberflächen aufgetragen wird.

15. Verfahren nach Anspruch 13 und 14 **dadurch gekennzeichnet, dass** vor dem Fügen gemäß Schritt c) die Klebstoffschicht elektromagnetischer Strahlung in Form von UV-, Elektronen- oder NIR-Strahlung ausgesetzt wird.

16. Verfahren nach Anspruch 13 und 14 **dadurch gekennzeichnet, dass** bei zumindest einem für die Strahlung transparenten Fügeteil, die elektromagnetische Bestrahlung nach dem Fügen gemäß Schritt c) erfolgt.

17. Herstellung von Holz- und Möbelteilen, Fensterproflen, Solarkollektoren, Filtern, Fahrzeugteilen oder -innenteilen, Büchern, Textilien, textilen Flächengebilden, Verbundfolien, Schuhen, Sportgegenständen, Fassadenelementen für Bauwerke, Gießharzscheiben, oder 2- oder Mehrscheiben-Isoliergläsern nach einem Verfahren gemäß Anspruch 13 bis 16.

## Claims

1. A process for the production of moisture-curing hotmelt adhesive granules, at least part of the polymeric constituents of the one-component hotmelt adhesive composition containing moisture-reactive groups and the surface of the granules being non-tacky at temperatures below 35°C, **characterized in that** the following key process steps are carried out:
a) melting the hotmelt adhesive composition and heating the melt to temperatures of 110°C to 180°C in the absence of moisture,
b) extruding the melt through 0.5 mm to 30 mm diameter nozzles onto a cooled surface in the absence of moisture,
c) cooling the granules in the absence of moisture, the composition solidifying,
d) removing the cooled hotmelt adhesive granules and, after the granules have solidified to the point where they are no longer tacky in the following step,
e) packing the granules in moisture-tight packs in the absence of moisture.

2. A process as claimed in claim 1, **characterized in that** the moisture-reactive groups of the adhesive composition are selected from isocyanate, silanol, alkoxysilane, acetoxysilane, silazane, oximatosilane groups or mixtures thereof.

3. A process as claimed in claim 1 or 2, **characterized in that** the adhesive composition additionally contains radiation-curing polymers or monomers.

4. A process as claimed in claim 3, **characterized in that** the radiation-curing polymers or monomers contain olefinically unsaturated groups and/or epoxide groups and optionally radiation-activated initiators or catalysts.

5. A process as claimed in at least one of the preceding claims, **characterized by** a particle size of the granules of 0.5 mm to 30 mm and preferably 2 to 10 mm.

6. A process as claimed in any of claims 1 to 5, **characterized in that** the viscosity of the melt at 150 ± 20°C is 10 ± 5 Pa.s, as measured with a Brookfield Thermosel viscosimeter.

7. A process as claimed in any of claims 1 to 6, **characterized in that**, after step b), the granules are treated with tack-reducing agents.

8. A process as claimed in claim 7, **characterized in that** the tack-reducing agents are selected from fine-particle dusts in the form of carbon black, highly disperse silica, polyethylene powder or talcum or from low-melting liquids which can be applied by spraying or dusting, such as waxes or paraffins.

9. A one-component hotmelt adhesive composition in the form of granules or a powder, at least part of the polymeric constituents containing moisture-reactive groups and the surface of the granules or powder particles being non-tacky at temperatures below 35°C and radiation-curing polymers or monomers additionally being present, obtainable by the process claimed in claims 3 to 8.

10. A hotmelt adhesive composition as claimed in claim 9, **characterized in that** the radiation-curing polymers or monomers contain olefinically unsaturated groups and/or epoxide groups and optionally radiation-activated initiators and catalysts.

11. A hotmelt adhesive composition as claimed in claim 9 or 10, **characterized in that** the particle size of the granules is in the range from 0.5 mm to 30 mm or the particle size of the powder is in the range from 5 µm to 500 µm.

12. A hotmelt adhesive composition as claimed in any of claims 9 to 11, **characterized in that** the particles do not stick to one another and remain free-flowing or pourable in storage.

13. A process for bonding sheet-form materials or mouldings, **characterized by** the following key process steps:
a) homogenizing and melting the reactive granules obtained in accordance with at least one of claims 9 to 12 in the absence of moisture and/or oxygen using a heatable mixing unit,
b) extruding the homogenized reactive thermoplastic mixture onto at least one surface of a sheet-form material or moulding,
c) applying a second matching sheet-form material or moulding to the applied layer of the reactive mixture,
d) optionally mechanically fixing the joined sheet-form materials or mouldings,
e) cooling the composite system thus formed to room temperature, the reactive hotmelt adhesive composition solidifying and curing by crosslinking.

14. A process as claimed in claim 13, **characterized in that**, in step b), the reactive melt is applied to at least one of the substrate surfaces to be joined by a heated applicator roller or a coating knife or by spraying.

15. A process as claimed in claims 13 and 14, **characterized in that**, before joining in step c), the adhesive layer is exposed to electromagnetic radiation in the form of UV, electron or NIR radiation.

16. A process as claimed in claims 13 and 14, **characterized in that**, where at least one substrate is transparent to the radiation, the exposure to electromagnetic radiation is carried out after joining in step c).

17. Production of wood or furniture parts, window profiles, solar collectors, filters, vehicle parts or interior parts, books, textiles, sheet-form textiles, laminated films, shoes, sports articles, façade elements for buildings, cast resin disks or two- or multi-layer insulating glass by the process claimed in claims 13 to 16.

## Revendications

1. Procédé de production d'un granulé d'adhésif fusible durcissant à l'humidité, dans lequel au moins une partie des constituants polymères de la composition d'adhésif fusible à un composant contient des groupes réagissant à l'humidité et la surface des particules de granulé n'est pas adhésive à des températures inférieures à 35 °C, **caractérisé en ce qu'**on effectue les étapes opératoires essentielles suivantes :
a) fusion de la composition d'adhésif fusible et chauffage de la masse fondue à des températures comprises entre 110 °C et 180 °C, à l'abri de l'humidité,
b) extrusion de cette masse fondue à travers des buses ayant un diamètre allant de 0,5 mm à 30 mm sur une surface refroidie à l'abri de l'humidité,
c) refroidissement du granulé à l'abri de l'humidité, ce qui fait que la composition se fige,
d) retrait du granulé refroidi et, après que les particules de granulé se soient solidifiées jusqu'à ce qu'elles n'adhèrent plus dans l'étape suivante,
e) conditionnement du granulé à l'abri de l'humidité dans des emballages étanches à l'humidité.

2. Procédé selon la revendication 1, **caractérisé en ce que** les groupes réagissant à l'humidité de la composition d'adhésif sont choisis parmi les groupes isocyanate, silanol, alcoxysilane, acétoxysilane, silazane, oximatosilane ou leurs mélanges.

3. Procédé selon l'une des revendications 1 ou 2, **caractérisé en ce que** la composition d'adhésif contient en outre des polymères ou des monomères durcissables aux rayonnements.

4. Procédé selon la revendication 3, **caractérisé en ce que** les polymères ou les monomères durcissables aux rayonnements contiennent des groupes oléfiniquement insaturés et/ou des groupes époxyde et le cas échéant des initiateurs pouvant être activés par les rayonnements ou des catalyseurs.

5. Procédé selon au moins une des revendications précédentes, **caractérisé par** une taille particulaire des granulés allant de 0,5 mm à 30 mm, de préférence de 2 à 10 mm.

6. Procédé selon l'une des revendications 1 à 5, **caractérisé en ce que** la viscosité de la masse fondue à 150 ± 20 °C s'élève à 10 ± 5 Pa.s, mesurée avec un viscosimètre Brookfield avec équipement Thermosel.

7. Procédé selon l'une des revendications 1 à 6, **caractérisé en ce qu'**on traite le granulé après l'étape b) avec des agents abaissant l'adhésivité.

8. Procédé selon la revendication 7, **caractérisé en ce que** les agents abaissant l'adhésivité sont choisis parmi des poudres fines sous forme de noir de fumée, d'acide silicique hautement dispersé, de poudre de polyéthylène ou de talc ou parmi des liquides à bas point de fusion pulvérisables ou poudrables sous forme solide, comme les cires ou les paraffines.

9. Composition d'adhésif fusible à un composant sous la forme d'un granulé ou d'une poudre, dans laquelle au moins une partie des constituants polymères contient des groupes réagissant à l'humidité et la surface des particules de granulé ou de poudre n'est pas adhésive à des températures inférieures à 35 °C et contient en outre des polymères ou des monomères durcissables aux rayonnements, que l'on peut obtenir au moyen d'un procédé selon l'une des revendications 3 à 8.

10. Composition d'adhésif fusible selon la revendication 9, **caractérisée en ce que** les polymères ou les monomères durcissables aux rayonnements contiennent des groupes oléfiniquement insaturés et/ou des groupes époxy, et le cas échéant des initiateurs pouvant être activés par des rayonnements et des catalyseurs.

11. Composition d'adhésif fusible selon l'une des revendications 9 ou 10, **caractérisée en ce que** la taille particulaire des granulés va de 0,5 mm à 30 mm ou **en ce que** la taille particulaire des poudres va de 5 µm à 500 µm.

12. Composition d'adhésif fusible selon l'une des revendications 9 à 11, **caractérisée en ce que** les particules n'adhèrent pas les unes aux autres et restent fluides ou versables à la conservation.

13. Procédé pour assembler des structures planes ou des pièces moulées, **caractérisé par** les étapes opératoires essentielles suivantes
a) homogénéisation et fusion du granulé réactif obtenu selon au moins une des revendications 9 à 12, à l'abri de l'humidité et/ou de l'oxygène, en utilisant un appareil de mélange qui peut être chauffé,
b) extrusion du mélange thermoplastique réactif homogénéisé sur au moins une surface d'une structure plane ou d'une pièce moulée,
c) adjonction d'une seconde structure plane ou pièce moulée qui s'y adapte sur la couche de mélange réactif déposée,
d) le cas échéant, fixation mécanique des structures planes ou pièces moulées adjointes,
e) refroidissement du système composite ainsi formé à la température ambiante, ce qui fait que la composition d'adhésif fusible réactive se fige et durcit en se réticulant.

14. Procédé selon la revendication 13, **caractérisé en ce qu'**on dépose la masse fondue réactive dans l'étape b) à l'aide d'un cylindre de dépôt chauffé ou d'une raclette, ou au moyen d'un dépôt par pulvérisation sur au moins une des surfaces de substrat à adjoindre.

15. Procédé selon l'une des revendications 13 et 14, **caractérisé en ce qu'**avant l'adjonction selon l'étape c) on soumet la couche d'adhésif à un rayonnement électromagnétique sous la forme d'un rayonnement UV, électronique ou infrarouge proche.

16. Procédé selon l'une des revendications 13 et 14, **caractérisé en ce qu'**au moins pour une pièce adjointe transparente aux rayonnements, on procède à l'irradiation électromagnétique après l'adjonction selon l'étape c).

17. Production de pièces de bois et de meubles, de profilés de fenêtres, de panneaux solaires, de filtres, de pièces ou d'éléments d'intérieur de véhicules, de livres, de textiles, de structures planes textiles, de feuilles composites, de chaussures, d'articles de sport, d'éléments de façade pour le bâtiment, de disques de résine de coulée, ou de verres isolants à deux ou plusieurs panneaux au moyen d'un procédé selon l'une des revendications 13 à 16.
